# DEMANDE DE BREVET EUROPEEN

(11) **EP 1 466 796 A1**
(43) Date de publication de la demande: **13.10.2004**
(21) Numéro de dépôt: 04290888.9
(22) Date de dépôt: 02.04.2004
(51) Int. Cl.: B60S 1/60

(54) **Dispositif escamotable de lavage de la glace de fermeture d'un dispositif d'éclairage et/ou de signalisation pour véhicule automobile**

(30) Priorité: 11.04.2003 FR 0304587
(71) Demandeur: VALEO VISION, 93012 Bobigny Cédex (FR)
(72) Inventeur: Mogliotti, Gian Piero, 10137 Torino (IT)
(74) Mandataire: Renous Chan, Véronique

(57) **Abrégé**

L'invention a pour objet un dispositif de lavage (1) de la glace de fermeture d'un dispositif d'éclairage/signalisation d'un véhicule automobile. il comprend au moins un gicleur (2, 2'), un porte-gicleur (3) et une pièce de style (4). Le porte-gicleur (3) présente au moins une position déployée/active et au moins une position de retrait/repos et est apte à être alimenté sélectivement par une source de liquide de lavage sous pression. Le(s) gicleur(s) (2, 2') est (sont) monté(s) directement ou indirectement sur le porte-gicleur (3). La pièce de style (4) est montée directement ou indirectement sur le porte-gicleur (3) par des moyens de fixation mécanique autorisant le déplacement (D1, D2, D3) de la pièce de style (4) par rapport au porte-gicleur (3) selon au moins un axe de rotation (X1) et au moins un axe de translation (X2,X3).

## Description

La présente invention concerne les dispositifs de lavage de glace de fermeture de dispositifs d'éclairage et/ou de signalisation du type projecteurs équipant des véhicules automobiles.

Dans la suite du texte, et par souci de concision, on pourra désigner ces dispositifs de lavage ces sous le nom de « lave-projecteur » et on ne parlera que d'application à des projecteurs.

Les lave-projecteur existants comprennent une buse, appelée communément gicleur, qui est alimentée en liquide de lavage sous pression et monté généralement en avant et en dessous de la glace du projecteur, de façon à ce que le liquide projeté atteigne la totalité de la glace à nettoyer. Il est connu d'associer le gicleur à un porte gicleur, escamotable à l'intérieur d'une ouverture pratiquée dans la carrosserie ou dans le pare-choc (appelé parfois aussi bouclier), du type comprenant un vérin dont la tige intérieure mobile porte à son extrémité libre le porte gicleur. On peut aussi noter que le lave-projecteur peut aussi se trouver dans un enjoliveur appartenant au projecteur lui-même. La chambre intérieure du vérin est alimentée directement par l'arrivée du liquide de lavage, et la pression dudit liquide provoque l'actionnement du vérin, pour amener le gicleur hors de la carrosserie par le déplacement de la tige, puis l'alimentation du gicleur avec le liquide pour l'aspersion de la glace. Il est également connu de munir le porte-gicleur d'une pièce de style, appelée aussi enjoliveur ou cache, de façon à ce que, en position de retrait du vérin, cette pièce vienne obturer l'ouverture pratiquée dans la carrosserie ou le pare-choc, en s'adaptant à ses contours et en adoptant généralement la couleur et l'aspect de l'élément dans laquelle elle est insérée (carrosserie ou pare-choc, enjoliveur associé au projecteur notamment).

On cherche bien sûr à ce que le lave-projecteur offre la plus grande efficacité de lavage possible quand le vérin est déployé. Mais il existe un certain nombre d'autres contraintes, tout particulièrement concernant la pièce de style. Il est en effet souhaitable que la pièce de style puisse se centrer correctement et simplement sur l'ouverture de la carrosserie quand le vérin se rétracte, en prenant en compte les tolérances sur le dimensionnement des pièces et sur le mouvement du vérin. On cherche aussi à ce que, quand le vérin est déployé ou en cours de déploiement/retrait, la pièce de style soit fixée de façon suffisamment rigide au porte-gicleur pour qu'elle ne se mette pas à vibrer ou à être animée de mouvements incontrôlés.

Le brevet FR 2 778 381 propose un lave-projecteur conçu de façon à ce que la pièce de style soit montée de façon rigide sur le porte-gicleur lorsque celui-ci est en position déployée, et qu'elle puisse se déplacer par rapport au porte-gicleur quand elle entre en contact avec la carrosserie. Cette solution est réalisée à l'aide d'un système de ressorts utilisés pour fixer la pièce de style au porte-gicleur.

L'invention a pour but la mise au point d'un lave-projecteur de fonctionnement amélioré, qui permette notamment d'obtenir les performances de lavage requises tout en ayant une pièce de style de fonctionnement satisfaisant. L'invention a accessoirement pour but la mise au point d'un tel lave-projecteur dont la conception et/ou le mode de fonctionnement soient simplifiés.

L'invention a tout d'abord pour objet un dispositif de lavage de la glace de fermeture d'un dispositif d'éclairage/signalisation d'un véhicule automobile, ledit dispositif comprenant au moins un gicleur un porte-gicleur et une pièce de style. Ce porte-gicleur présente au moins une position déployée/active hors de la carrosserie et au moins une position de retrait/repos dans la carrosserie et il est apte à être alimenté sélectivement par une source de liquide de lavage sous pression. Le ou les gicleur(s) est (sont) monté(s) directement ou indirectement sur le porte-gicleur. La pièce de style est montée directement ou indirectement sur le porte-gicleur par des moyens de fixation mécanique autorisant le déplacement (D1, D2, D3) de la pièce de style par rapport au porte-gicleur selon au moins un axe de rotation (X1) et au moins un axe de translation (X2,X3).

L'invention utilise ainsi un montage « flottant » mais contrôlé de la pièce de style par rapport au porte-gicleur, ce qui présente plusieurs avantages : contrairement au brevet précité, le mode de fixation de la pièce de style au porte-gicleur est le même quelle que soit la position de ce dernier par rapport à la carrosserie, ce qui permet une conception plus simple de la fixation. Par ailleurs, on privilégie une fixation contrôlée, c'est-à-dire que la pièce de style peut effectivement bouger relativement par rapport au porte-gicleur, mais avec des amplitudes modérées, ce qui est un compromis très avantageux : On évite des mouvements intempestifs importants de la pièce de style quand le porte-gicleur est en phase de déploiement ou quand il est en position déployée. Par contre, cette possibilité de mobilité modérée de la pièce de style par rapport au porte-gicleur est très intéressante lors des phases d'accostage, c'est-à-dire quand le porte-gicleur est en mouvement de retrait et que la pièce de style entre en contact avec les bords de l'ouverture pratiquée dans la carrosserie : la pièce de style va alors pouvoir se recentrer elle-même par rapport à cette ouverture en bougeant légèrement par rapport au porte-gicleur si cela s'avère nécessaire. On compose ainsi de façon très satisfaisante avec les tolérances dans la précision du mouvement du porte-gicleur par rapport à la carrosserie. Le fait que l'invention autorise à la fois un mouvement de rotation et au moins un mouvement de translation de la pièce de style par rapport au porte-gicleur garantit que la pièce de style, par son mouvement relatif vis-à-vis du porte-gicleur, va pouvoir compenser toutes ces tolérances sans difficulté.

De préférence, la fixation mécanique de la pièce de style au porte-gicleur autorise un déplacement de la pièce de style par rapport au porte-gicleur selon un axe de rotation et deux axes de translation. On a ainsi les trois degrés de liberté offrant la mobilité relative optimale entre les deux pièces.

De préférence et comme dit plus haut, on cantonne les mouvements relatifs de la pièce de style par rapport au porte-gicleur à des amplitudes modérées. Par exemple, le déplacement en rotation de la pièce de style par rapport au porte-gicleur est choisi d'une amplitude d'au plus 5°, notamment compris entre 1 et 4°. De même, le déplacement autorisé en translation de la pièce de style par rapport au porte-gicleur est choisi de préférence selon un premier axe d'une amplitude d'au plus 4 mm, notamment compris entre 0,5 et 3 mm. Enfin, dans le cas où il y a aussi une possibilité de translation selon un second axe, le déplacement autorisé en translation de la pièce de style par rapport au porte-gicleur est choisi de préférence selon un second axe d'une amplitude d'au plus 3 mm, notamment compris entre 0,3 et 2 mm. L'amplitude de ces déplacements est ajustable.

Avantageusement, les moyens de fixation mécaniques comprennent des premiers moyens faisant partie du porte-gicleur ou étant rapportés audit porte-gicleur et des seconds moyens faisant partie de la pièce de style ou étant rapportés à ladite pièce de style, lesdits premiers et seconds moyens coopérant pour assurer la fixation par clippage. On préfère choisir des éléments de fixation faisant partie intégrante des deux pièces à fixer l'une à l'autre pour simplifier la conception du lave-projecteur et diminuer au mieux le nombre de pièces qui le composent. Le système de fixation par clippage est intéressant car il permet justement d'ajuster précisément les jeux entre les deux pièces ainsi fixées l'une à l'autre.

De préférence, la pièce de style comprend au moins une, de préférence une ou deux pattes de fixation au porte-gicleur.

La variante avec une seule patte de fixation est privilégiée dans le cas où le porte-gicleur ne contient qu'un seul gicleur, et qu'il est ainsi d'encombrement moindre. Dans ce cas, un bord de la patte est disposé contre la face interne de la pièce de style à proprement dite, par exemple de façon à ce que cette patte soit dessus ou en dessous de l'extrémité du porte-gicleur dans laquelle se trouve le gicleur, en comprenant les termes « dessus « et « dessous » en fonction de la position relative des deux pièces une fois le lave-projecteur monté sous le projecteur.

La variante avec deux pattes de fixation est privilégiée notamment quand le porte-gicleur contient deux gicleurs et qu'il est de fait plus encombrant. Dans ce cas là, les pattes sont de préférence disposées latéralement par rapport à l'extrémité du porte-gicleur dans laquelle se trouvent les deux gicleurs, les deux pattes étant face à face de chaque côté du porte-gicleur et étant de préférence symétriques dans leur conception et leur disposition.

De préférence, la ou les pattes de fixation de la pièce de style présente au moins une fente, notamment en forme de U ou de V. La patte ou au moins une des pattes est munie d'un clip, notamment disposé dans la partie pleine de la patte qui se trouve délimitée par cette fente. La fente est utile pour donner de la flexibilité et permettre un clippage aisé décrit plus loin des butées du porte-gicleur sur ce clip. La patte ayant une longueur donnée, une extrémité fixée à la face interne de la pièce de style et une extrémité libre, on préfère disposer la fente associée au clip à une distance inférieure ou égale à la moitié de la longueur de la patte, distance mesurée à partir de extrémité libre de ladite patte.

Avantageusement, le porte-gicleur comprend des moyens de pincement coopérant avec la ou chacune des pattes de fixation de la pièce de style. Ces moyens de pincement comprennent de préférence au moins une butée coopérant avec le clip précité de la pièce de style pour en assurer le maintien. Ces moyens de pincement sont de préférence disposés en regard de la ou des pattes de fixation de la pièce de style. Dans le cas où il y a deux pattes de fixation, ces moyens de pincement peuvent se présenter sous la forme d'extensions latérales du porte-gicleur et en font partie intégrante.

Ces moyens de pincement comprennent avantageusement plus d'une butée, notamment deux ou quatre butées, chaque butée venant pincer une zone du bord d'une patte de fixation de la pièce de style.

Avantageusement, on prévoit une répartition des butées telle que une partie de ces butées viennent de pincer une zone d'un bord de la patte de fixation et le reste des butées viennent pincer une zone d'un bord opposé de ladite patte de fixation.

On peut alors choisir la répartition, l'emplacement, le nombre des butées et leur dimensionnement relatif par rapport au bord des pattes de fixation pour ajuster et maîtriser les jeux entre pièce de style et porte-gicleur tout en assurant un maintien suffisant de la pièce de style au porte-gicleur.

On peut noter que les butées du porte-gicleur peuvent être réparties afin d'exercer un maintien de la patte ou de chacune des pattes de fixation sur la majorité de sa longueur, notamment sur au moins 60 à 80 % de sa longueur.

De préférence, la pièce de style comprend au moins un moyen de centrage par rapport à la carrosserie, notamment sous la forme d'un ou plusieurs doigts de centrage disposés sur la face interne de la pièce de style. Lors de l'accostage de la pièce de style contre la carrosserie/le pare-choc ou le bouclier, ces doigts ou pions vont recentrer si besoin la pièce de style par rapport à l'ouverture, sans que le mouvement du porte-gicleur en soit affecté, grâce à la mobilité relative de la pièce de style. Avantageusement, on les répartit en paires de doigts, chaque doigt d'une paire faisant face à l'autre doigt de la paire, les deux doigts étant disposés à proximité de deux bords opposés de ladite face interne. On prévoit notamment de une à quatre paire de doigts.

L'invention a également pour objet le véhicule muni d'un tel lave-projecteur.

L'invention sera détaillée ci-après avec un exemple non limitatif, à l'aide des figures suivantes :
- **fig.1:** une représentation schématique de l'ensemble du lave-projecteur
- **fig. 2 :** une représentation agrandie de extrémité du porte-gicleur et de la pièce de style selon la figure 1
- **fig. 3 :** une autre représentation agrandie de extrémité du porte-gicleur et de la pièce de style selon la figure 1
- **fig. 4 :** une vue agrandie du clip représenté aux figures 2 et 3
- **fig.5:** une coupe transversale agrandie d'une butée pinçant la patte de la pièce de style représentée aux figures 2 et 3

Le principe de fonctionnement standard d'un lave -glace ne sera pas repris ici, on pourra pour plus de détails se reporter au brevet cité en préambule.

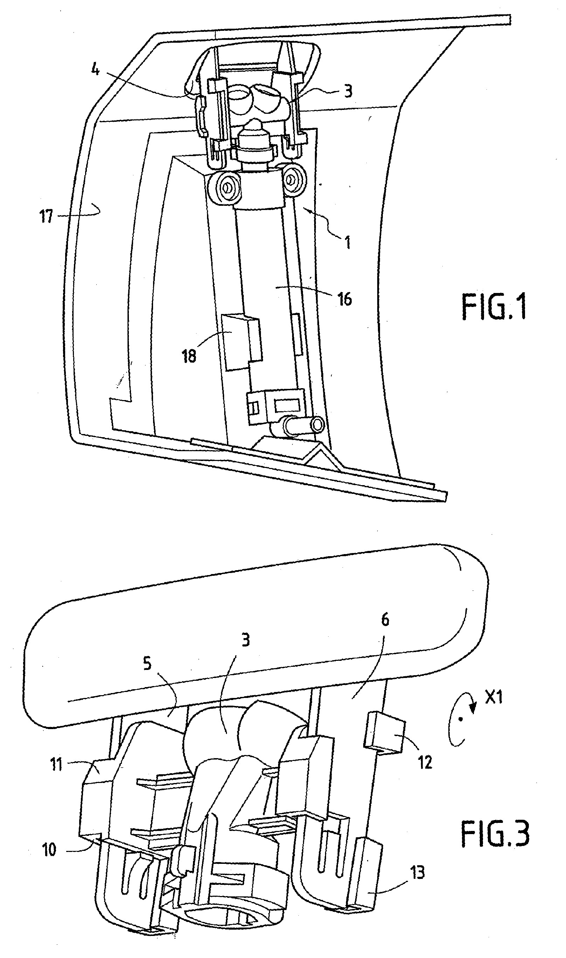

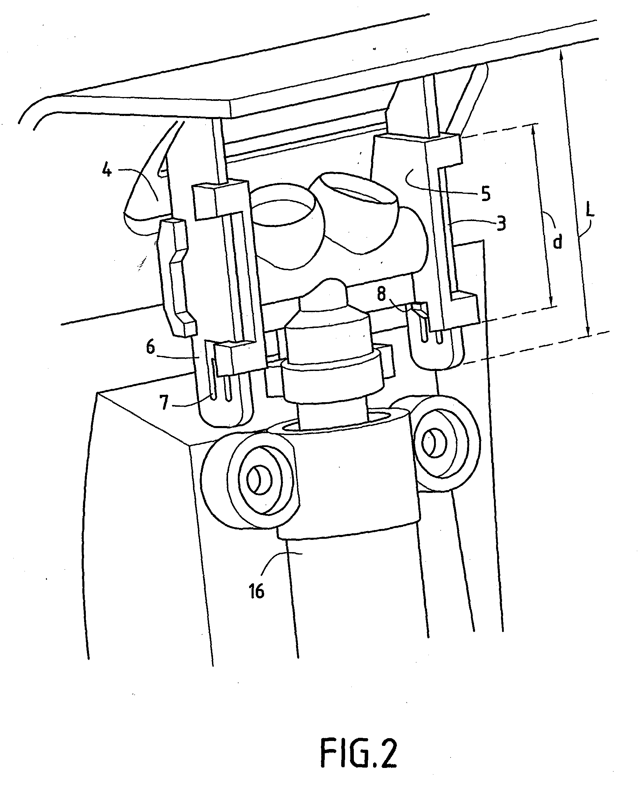

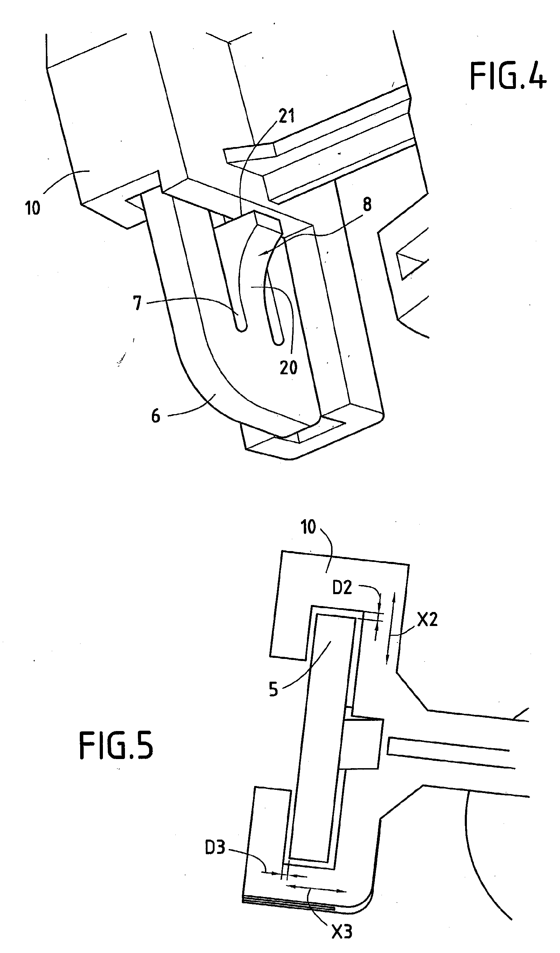

La figure 1 représente le lave glace 1 comprenant le vérin 16, le bouclier du véhicule 17 sur lequel est rapporté un élément porte-verin 18. Est aussi représenté un porte-gicleur 3. extrémité libre du porte-gicleur comprend deux têtes arrondies dans lesquelles sont introduits deux gicleurs non représentés. La pièce de style 4 présente une face externe dont l'aspect et la couleur se rapprochent de celle du bouclier 17 dans lequel est pratiquée une ouverture sur laquelle la pièce de style est plaquée quand le porte-gicleur 3 est en position de repos. La pièce de style 4 comporte deux pattes de fixation latérales 5,6 solidaires par un de leurs bords à la face interne de la pièce. Chacune des pattes 5,6 présente une fente 7 approximativement en forme de U. Cette fente est disposée à proximité du bord libre de chaque patte qui est opposé au bord solidaire de la face interne de la pièce de style. Si on considère la longueur L de la patte (sa plus grande longueur, sachant qu'elle est biseautée), la fente s'étend sur environ une distance d égale par exemple entre ¼ et 1/5 de la longueur L, est elle est disposée sur la moitié inférieure de la patte (inférieure est à comprendre comme la moitié la plus éloignée du bord fixé à la pièce de style). Dans la partie pleine du U, se trouve un clip 8. Les figures suivantes, et notamment les figures 2 et 3 et 4 montrent les détails de cette fente 7 associée au clip 8. Le clip présente un pan incliné 20 de préférence courbe et un pan plan 21 qui permet de caler par clippage la butée 10 qui fait partie des moyens de pincement 9 du porte-gicleur 3. La figure 5 montre une vue de dessous d'un détail de la figure 3 : on y voit la butée 10 qui présente une section telle qu'elle vient complètement enserrer le chant de la patte 5 sur ses trois faces.

Ces moyens de pincement 9 comprennent en effet (pour coopérer avec chacune des pattes 5,6) quatre butées 10, 11, 12, 13. Elles sont réparties en deux groupes :
- d'une part les butées 10 qui sont celles qui coopèrent avec le clip 8, et les butées 11, ces deux butées venant pincer l'un des bords latéraux de la patte
- d'autre part les butées 12, 13, qui viennent pincer le bord latéral de la patte opposé au précédent.

Le mode de réalisation de ces butées peut bien sûr largement varier. On peut ainsi prévoir que les butées 12,13 soient similaires aux butées bien différenciées 10, 11. On peut aussi prévoir que les butées 12, 13 n'en fassent qu'une, ou soient disposées de façon différente par rapport aux butées 10, 11.

On voit ici que l'ensemble des butées permet un maintien de chacune des pattes sur une distance d qui fait plus des 2/3 de la longueur I totale de chacune des pattes. Le dimensionnement des butées du porte-gicleur 4 par rapport à celui du clip 8 et des bords latéraux des pattes 5,6 permet de sélectionner les jeux entre les deux pièces qui vont donner à la pièce de style 4 la possibilité de bouger par rapport au porte-gicleur pour se recentrer lors des phases d'accostage : à la figure 3, on voit l'axe X1 de rotation autour duquel la pièce de style peut pivoter par rapport au porte-gicleur 4 d'un angle généralement choisi d'environ 2°. A la figure 5, on voit les axes de translation X2 et X3, et l'amplitude des déplacements D2, D3 en translation de la pièce de style 4 par rapport au porte-gicleur 3 par le choix d'une butée 10 permettant au bord de la pièce de style un débattement dans deux directions perpendiculaires entre elles. D1 est par exemple égal à 2 mm et D2 à 1 mm (ou réciproquement, les deux jeux pouvant également être choisis identiques ou différents dans une gamme de l'ordre de 0,5 à 3 mm.

La face interne de la pièce de style 4 est munie de quatre paires de doigts de centrage 14, 15 : quand le porte-gicleur se rétracte, les doigts viennent d'abord en contact avec le bord de l'ouverture du bouclier du véhicule, de manière à accompagner l'accostage de la pièce de style elle-même et à assurer son centrage par rapport à ladite ouverture. Le centrage de la pièce de style étant correctement assuré grâce à l'invention, on peut alors se permettre d'avoir des pièces de style de dimensions calculées au plus juste, alors que précédemment on avait tendance à prévoir que la pièce de style « déborde « largement de l'ouverture, pour assurer l'occultation de l'ouverture même en cas de centrage incorrect entre la pièce de style et l'ouverture. Ces doigts de centrage sont disposés sur deux bords opposés de la face interne de la pièce de style. Il est en effet avantageux de les répartir en paires de doigts de centrage, les deux doigts d'une paire se faisant face sur deux côtés opposés de la face interne. De préférence, on prévoit quatre paires, de façon à assurer un recentrage de la pièce de style dans le plan de la carrosserie ou du pare-choc dans les deux directions, mais on peut aussi ne prévoir que 1, 2 ou 3 paires. Ici, de façon non limitative, ces doigts présentent une ou plusieurs faces inclinées, ces faces assurant le guidage de la pièce sur la carrosserie ou le pare-choc. Ils ont par exemple la forme de pyramides tronquées, dont l'axe est éventuellement oblique par rapport à leur base, la base pouvant être un polygone du type carré, losange, pentagone, rectangle, parallélogramme.

En conclusion, l'invention propose un lave-projecteur robuste et de conception simple, autorisant un centrage optimal de la pièce de style par rapport à l'ouverture de la carrosserie ou du pare-choc.

## Revendications

1. Dispositif de lavage (1) de la glace de fermeture d'un dispositif d'éclairage/signalisation d'un véhicule automobile, ledit dispositif comprenant au moins un gicleur (2, 2'), un porte-gicleur (3) et une pièce de style (4), ledit porte-gicleur (3) présentant au moins une position déployée/active hors de la carrosserie et au moins une position de retrait/repos dans la carrosserie et étant apte à être alimenté sélectivement par une source de liquide de lavage sous pression, **caractérisé en ce que** le(s) gicleur(s) (2, 2') est (sont) monté(s) directement ou indirectement sur le porte-gicleur (3), **en ce que** la pièce de style (4) est montée directement ou indirectement sur le porte-gicleur (3) par des moyens de fixation mécanique autorisant le déplacement (D1, D2, D3) de la pièce de style (4) par rapport au porte-gicleur (3) selon un axe de rotation (X1) et deux axes de translation (X2,X3), et **en ce que** lesdits moyens de fixation mécaniques comprennent des premiers moyens faisant partie du porte-gicleur ou étant rapportés audit porte-gicleur (3) et des seconds moyens faisant partie de la pièce de style (4) ou étant rapportés à ladite pièce de style, lesdits premiers et seconds moyens coopérant pour assurer la fixation par clippage.

2. Dispositif selon l'une des revendications précédentes, **caractérisé en ce que** le déplacement (D1) en rotation de la pièce de style (4) par rapport au porte-gicleur (3) est d'une amplitude d'au plus 5°, notamment compris entre 1 et 4°.

3. Dispositif selon l'une des revendications précédentes, **caractérisé en ce que** le déplacement (D2) autorisé en translation de la pièce de style (4) par rapport au porte-gicleur (3) est selon un premier axe (X1) d'une amplitude d'au plus 4 mm, notamment compris entre 0,5 et 3 mm.

4. Dispositif selon l'une des revendications précédentes, **caractérisé en ce que** le déplacement (D2) autorisé en translation de la pièce de style (4) par rapport au porte-gicleur (3) est selon un second axe (X2) d'une amplitude d'au plus 3 mm, notamment compris entre 0,3 et 2 mm.

5. Dispositif selon l'une des revendications précédentes, **caractérisé en ce que** la pièce de style (4) comprend au moins une, de préférence une ou deux pattes (5,6) de fixation au porte-gicleur (3).

6. Dispositif selon la revendication 5, **caractérisé en ce que** la ou les pattes de fixation (5,6) de la pièce de style (4) présente au moins une fente (7), notamment en forme de U ou de V.

7. Dispositif selon la revendication 5 ou la revendication 6, **caractérisé en ce que** la patte ou au moins une des pattes de fixation (5,6) de la pièce de style (4) est munie d'un clip (8), notamment disposé dans la partie pleine de la patte qui se trouve délimitée par une fente (7) en forme de U ou de V.

8. Dispositif selon l'une des revendications 5 à 7, **caractérisé en ce que** le porte-gicleur (3) comprend des moyens de pincement (9) coopérant avec la ou chacune des pattes de fixation (5,6) de la pièce de style (4).

9. Dispositif selon la revendication 8, **caractérisé en ce que** les moyens de pincement (9) du porte gicleur (3), comprennent au moins une butée (10) coopérant avec le clip (8) de la pièce de style pour en assurer le maintien.

10. Dispositif selon la revendication 8 ou 9, **caractérisé en ce que** les moyens de pincement (9) comprennent plus d'une butée, notamment 4 butées (10, 11, 12, 13), chaque butée venant pincer une zone du bord d'une patte de fixation (5,6) de la pièce de style (4).

11. Dispositif selon l'une des revendications 8 à 10, **caractérisé en ce que** les moyens de pincement (9) comprennent des butées (10, 11) venant pincer une zone d'un bord de la patte de fixation (5,6) et des butées (12,13) venant pincer une zone d'un bord opposé de ladite patte de fixation.

12. Dispositif selon l'une des revendications précédentes, **caractérisé en ce que** la pièce de style (4) comprend au moins un moyen de centrage par rapport à la carrosserie, notamment sous la forme d'un ou plusieurs doigts de centrage (14,15) disposés sur la face interne de la pièce de style (4)

13. Véhicule automobile **caractérisé en ce qu'**il est muni du dispositif de lavage (1) selon l'une au moins des revendications précédentes.
